# FASCICULE DE BREVET EUROPEEN

(11) **EP 0 435 990 B1**
(45) Date de publication et mention de la délivrance du brevet: **20.04.1994**
(21) Numéro de dépôt: 90910753.4
(22) Date de dépôt: 11.07.1990
(51) Int. Cl.: G01N 30/94

(54) **DISPOSITIF ET INSTALLATION DE CHROMATOGRAPHIE EN COUCHE MINCE AVEC PERFECTIONNEMENT DE LA REVELATION**
VORRICHTUNG UND INSTALLATION DER DÜNNSCHICHTCHROMATOGRAPHIE MIT PERFEKTIONIERUNG DER ENTWICKLUNG
DEVICE AND INSTALLATION OF THIN FILM CHROMATOGRAPHY, WITH IMPROVED DEVELOPMENT

(30) Priorité: 13.07.1989 FR 8909527; 14.02.1990 FR 9001735
(43) Date de publication de la demande: 10.07.1991
(73) Titulaire: POSTAIRE, Eric, 92170 Vanves (FR); SARBACH, Christian, F-78000 Versailles (FR); DELVORDRE, Pascal, F-78360 Montesson (FR)
(72) Inventeur: POSTAIRE, Eric, 92170 Vanves (FR); SARBACH, Christian, F-78000 Versailles (FR); DELVORDRE, Pascal, F-78360 Montesson (FR)
(74) Mandataire: Ores, Irène
(86) Numéro de dépôt international: FR9000520
(87) Numéro de publication internationale: WO9101000

(56) Documents cités:
- FR-A- 2 158 774
- Journal of Chromatography, Vol. 410, 1987, Elsevier Science Publishers B.V., (Amsterdam, NL), N. De Kruijf et al: "Determination of preservatives in cosmetic products. 1. Thin-layer chromatographic procedure for the indentification of preservatives in cosmetic products", pages 395-411.

## Description

La présente invention est relative à un perfectionnement apporté à l'étape de révélation de la chromatographie en couche mince, à un dispositif de révélation pour la mise en oeuvre dudit perfectionnement ainsi qu'à une installation comportant ledit dispositif.

La chromatographie en couche mince (CCM) est une méthode de séparation par migration différentielle entre une phase stationnaire et une phase mobile. La couche mince présente un certain nombre d'avantages (notamment rapidité de migration, emploi de n'importe quel type de réactif de révélation).

C'est une méthode d'identification qui permet notamment de déterminer la pureté d'un produit, les produits de décomposition donnant des tâches supplémentaires.

La CCM présente de nombreuses applications qualitatives tant dans le domaine pharmaceutique que dans le domaine agro-alimentaire. Cependant, la CCM se prête à une interprétation quantitative avec des erreurs de 5 à plus de 10 % dans certains cas.

La CCM comprend cinq étapes :
. le dépôt des substances à identifier et/ou à doser sur un support approprié ;
. la migration ;
. le séchage ;
. la révélation ;
. la lecture.

Un certain nombre de ces opérations ont été optimisées, afin de diminuer les risques d'erreurs inhérents aux différentes manipulations ; en particulier, les opérations de dépôt, de migration, de séchage et de lecture ont notamment été automatisées et ont permis de diminuer notablement les risques d'erreur ; par contre, la révélation, à l'heure actuelle, lorsqu'elle est nécessaire, est réalisée soit - par pulvérisation de réactifs spécifiques qui permettent d'obtenir des tâches colorées ou fluorescentes, soit - par immersion totale de la plaque de chromatographie.

Par exemple, l'article aux noms de N. DE KRUIF et al. (J. Chromato., 1987, 410, 395-411) décrit un procédé de détection de conservateurs dans des produits cosmétiques. La procédure plus particulièrement décrite pour cette identification, est une procédure chromatographique en couche mince. Six réactifs de détection sont décrits dont 5 sont pulvérisés et dont le sixième, en raison de sa toxicité, est appliqué sur la plaque chromatographique à l'aide d'un rouleau recouvert de laine, préalablement immergé dans ledit réactif ; il est, en particulier, spécifié que l'application du rouleau est réalisée jusqu'à mouillage complet de la plaque chromatographique.

Ces techniques de révélation par pulvérisation ou immersion présentent un certain nombre d'inconvénients :
En particulier, la pulvérisation :
- donne des résultats différents selon le manipulateur ;
- donne un fond non homogène ;
- peut nécessiter l'utilisation d'air comprimé, et donc d'une installation particulière ;
- peut provoquer des traînées ou coulées qui rendront la lecture difficilement interprétable.

La révélation par immersion pour sa part :
- peut provoquer une diffusion et une dilution des taches ;
- donne un fond trop coloré ;
- réclame une quantité importante de révélateur.

La présente invention s'est, en conséquence, donné pour but de pourvoir à un perfectionnement de l'étape de révélation de la chromatographie en couche mince, qui répond mieux aux nécessités de la pratique que les procédés de révélation utilisés jusqu'à présent, notamment en ce qu'il a l'avantage d'améliorer, de manière inattendue, la reproductibilité et la répétabilité des techniques de chromatographie en couche mince, plus particulièrement dans leurs applications quantitatives.

C'est également un but de l'invention de pourvoir à un dispositif de révélation pour la mise en oeuvre dudit perfectionnement, ainsi qu'à une installation comportant ledit dispositif.

La présente invention a pour objet un procédé de révélation en chromatographie en couche mince, comprenant une mise en contact d'une plaque de chromatographie à révéler avec un matériau imprégné d'un réactif de révélation, caractérisé en ce que ladite mise en contact est réalisée en pressant, de manière sensiblement uniforme, un polymère poreux contenant ledit réactif de révélation contre ladite plaque de CCM à révéler, lequel polymère poreux possède (i) un pouvoir absorbant suffisant pour imprégner complètement ladite plaque de chromatographie, sans l'immerger lors de la mise en contact sous pression, et (ii) une capacité de réabsorption de l'excès de réactif, au moment du retrait dudit polymère poreux de ladite plaque.

On entend par pression, au sens de la présente invention, l'action de presser ou de pousser avec effort, ladite pression pouvant être exercée manuellement ou mécaniquement.

Ledit polymère poreux est résistant aux réactifs de révélation usuels de la chromatographie.

Un tel procédé de révélation appelé dérivatisation sous pression (DSP) par les Inventeurs, a l'avantage de donner un fond uniforme et d'améliorer, de manière inattendue, la reproductibilité et la répétabilité des techniques de chromatographie en couche mince, notamment quantitatives.

Un tel procédé a également l'avantage d'être aisément automatisable.

La présente invention a également pour objet un dispositif de révélation pour chromatographie en couche mince, caractérisé en ce qu'il comprend :
- un polymère poreux, résistant aux réactifs de révélation usuels de la chromatographie et présentant un pouvoir absorbant suffisant pour imprégner complètement une plaque de chromatographie sans l'immerger au moment de la mise en contact sous pression et pour réabsorber l'excès de réactif lors du retrait de ladite matière poreuse de la plaque de chromatographie, et
- un support de manipulation inerte par rapport aux réactifs de révélation, de rigidité suffisante pour permettre l'application d'une pression appropriée sur la plaque de chromatographie en couche mince et sur lequel est monté ou fixé ladite matière poreuse.

Ledit polymère présente avantageusement une structure de mousse ou d'éponge.

Selon une disposition avantageuse de ce mode de réalisation, ledit polymère est une mousse de polyuréthane à alvéoles ouvertes.

Selon un autre mode de réalisation avantageux dudit dispositif, il est de forme cylindrique, par exemple un rouleau ou présente une surface semi-cylindrique convexe.

Selon encore un autre mode de réalisation avantageux dudit dispositif, il est de forme rectangulaire.

Ledit dispositif présente nécessairement une zone de contact plan avec la plaque de chromatographie, pour appliquer une pression sensiblement constante et uniforme sur la plaque de chromatographie, quelle que soit la zone de contact.

La présente invention a, en outre, pour objet une installation appropriée à l'étape de révélation de la chromatographie en couche mince, caractérisée en ce qu'elle comprend, outre un dispositif conforme à l'invention, des moyens de guidage et de déplacement dudit dispositif et/ou de la plaque de chromatographie à révéler.

Selon un mode de réalisation avantageux de ladite installation, lorsqu'elle comprend des moyens de guidage et de déplacement du dispositif, elle comprend en outre :
- une zone d'imprégnation du dispositif de révélation conforme à l'invention ;
- une zone de révélation où se trouve la plaque de chromatographie en couche mince à révéler ; et lesdits moyens de guidage déplacent ledit dispositif entre une position où il se trouve dans la zone d'imprégnation et une position de repos, lequel déplacement provoque la mise sous pression du dispositif conforme à l'invention avec la plaque de chromatographie en couche mince et l'imprégnation de ladite plaque par le réactif de révélation.

Selon une disposition avantageuse de ce mode de réalisation, ladite installation comprend en outre une zone d'égouttage du dispositif, entre la zone d'imprégnation et la zone de révélation.

Conformément à ce mode de `réalisation, ledit dispositif est avantageusement un rouleau de forme cylindrique, comprenant un arbre axial dont les extrémités sont reçues dans des glissières de guidage s'étendant latéralement de part et d'autre des zones précitées d'imprégnation, de révélation et de repos.

Selon une autre disposition avantageuse de ce mode de réalisation, ladite installation se présente sous la forme d'une boîte à couvercle pivotant, permettant l'accès aux zones précitées d'imprégnation, de révélation et de repos et délimitant les glissiéres précitées avec les parois latérales fixes de ladite boîte.

Selon un autre mode de réalisation avantageux de ladite installation, lorsqu'elle comprend des moyens de guidage et de déplacement de la plaque de chromatographie à révéler, ledit dispositif comprend un rouleau cylindrique monté en rotation autour d'un axe fixe et sur la surface cylindrique duquel est enroulée ladite matière poreuse imprégnée desdits réactifs et lesdits moyens de guidage déplacent ladite plaque de chromatographie -située à une distance dudit rouleau cylindrique choisie pour assurer une pression de contact déterminée de la matière poreuse sur la plaque et pour réaliser l'imprégnation de ladite plaque par le réactif de révélation-, dans un plan tangentiel audit rouleau.

Selon une disposition avantageuse de ce mode de réalisation, les moyens de guidage de la plaque de chromatographie à révéler sont constitués par un deuxième rouleau, tournant autour d'un axe fixe, parallèle à celui du premier rouleau et verticalement écarté de celui-ci.

Selon une modalité avantageuse de cette disposition, au moins l'un des deux rouleaux est entraîné en rotation autour de son axe.

Le deuxième rouleau a l'avantage à la fois de coopérer avec le premier rouleau dans le guidage de ladite plaque de chromatographie et de permettre l'application d'une pression uniforme et homogène, exercée par le dispositif de révélation de forme cylindrique ou rouleau sur la plaque à révéler.

Selon une autre disposition avantageuse de ce mode de réalisation, ladite installation comprend une zone d'imprégnation en réactif, située sous le premier rouleau.

Selon encore une autre disposition avantageuse de ce mode de réalisation de l'installation, la surface cylindrique du premier rouleau est partagée en plusieurs compartiments ou secteurs, juxtaposés le long de l'axe du rouleau.

Ladite zone d'imprégnation peut avantageusement être compartimentée de la même façon que le rouleau.

Une telle zone a l'avantage de permettre, sur une même plaque, la révélation de différents chromatogrammes, à l'aide de 2 à n révélateurs situés dans les différents compartiments dudit bac à compartiments.

Selon encore une autre disposition de ce mode de réalisation, les moyens de guidage de la plaque de chromatographie sont constitués par des glissières orientées dans le plan précité perpendiculairement à l'axe du dispositif, recevant les bords de ladite plaque de révélation ou de son support, et des moyens de traction ou de poussée sont prévus pour déplacer ladite plaque le long des glissières.

Selon une modalité avantageuse de cette disposition, lesdites glissières sont des rainures ou des rails montés sur un boîtier de support dudit premier rouleau cité.

Outre les dispositions qui précèdent, l'invention comporte encore d'autres dispositions, qui ressortiront de la description qui va suivre.

L'invention sera mieux comprise à l'aide du complément de description qui va suivre, qui se réfère à des exemples de mise en oeuvre du procédé conforme à l'invention et à une description détaillée du dispositif de révélation et de l'installation selon l'invention, avec référence aux dessins annexés dans lesquels :
- la figure 1 représente une courbe d'étalonnage du procédé conforme à l'invention ;
- la figure 2 est une représentation en perspective d'un mode de réalisation de forme carrée du dispositif conforme à la présente invention ;
- la figure 3 est une représentation d'un autre mode de réalisation carré du dispositif conforme à l'invention ;
- la figure 4 est une représentation d'un mode de réalisation cylindrique du dispositif conforme à l'invention ;
- les figures 5, 6 et 7 sont une représentation d'un mode de réalisation de l'installation conforme à l'invention : les figures 5 et 6 sont des vues en coupe et la figure 7 est une vue en perspective ;
- la figure 8 est une représentation en perspective d'un mode de réalisation d'une installation conforme à l'invention, comprenant un dispositif de révélation cylindrique et dont les moyens de guidage de la plaque de chromatographie à révéler sont représentés par un second rouleau ;
- les figures 9 et 10 sont des vues en coupe de l'installation de la figure 8 ;
- la figure 11 est une représentation en perspective d'un autre mode de réalisation d'une installation conforme à l'invention, comprenant un dispositif de révélation cylindrique et dont les moyens de guidage de la plaque de chromatographie à révéler sont constitués par un second rouleau ;
- la figure 12 est une représentation en perspective d'un mode de réalisation d'une installation conforme à l'invention, comprenant un dispositif de révélation cylindrique et dont les moyens de guidage de la plaque de chromatographie à révéler sont constitués par des rails, recevant les bords d'un support de ladite plaque de révélation et associés à des moyens de traction de ladite plaque le long desdits rails.

Il doit être bien entendu, toutefois, que ces dessins et les parties descriptives correspondantes ainsi que les exemples sont donnés uniquement à titre d'illustration de l'objet de l'invention, dont ils ne constituent en aucune manière une limitation.

### Exemple 1 :

On réalise une chromatographie sur couche mince pour le dosage du tryptophane comme suit :
- plaques : cellulose non fluorescente 20 x 20 cm (MERCK)
- phase mobile :

| | |
|---|---|
| Butanol 1 | 80 volumes |
| Acide acétique | 20 volumes |
| Eau | 100 volumes |

- échantillons : solution de tryptophane à 2 mg/ml
- dépôts : 10 dépôts de 2 µl, réalisés à l'aide de l'appareil LINOMAT IV (CAMAG)
- réactif de révélation : ninhydrine/cuivre
solution A :

| | |
|---|---|
| ninhydrine | 1,6 g |
| éthanol | 800 ml |
| acide acétique | 160 ml |
| 2-4-6 collidine | 32 ml |

solution B : nitrate cuivrique à 2 % dans l'éthanol
On mélange 100 ml de solution A et 6 ml de solution B, pour obtenir le réactif de révélation.
- on imbibe un dispositif de révélation conforme à l'invention avec le réactif de révélation ci-dessus ;
- on applique ledit dispositif imbibé sous pression sur la plaque de chromatographie, au moment de la révélation ;
- la lecture photodensitométrique est réalisée à l'aide d'un appareil CD60 (DESAGA). Les plaques sont lues avant et après révélation à l'aide du dispositif conforme à l'invention.

1. Chromatogramme non révélé - lecture à 254 nm (U.V. direct) :

| DEPOT | AIRE | HAUTEUR |
|---|---|---|
| 1 | 789,1 | 173,48 |
| 2 | 637,8 | 143,91 |
| 3 | 715,5 | 117,09 |
| 4 | 827,0 | 193,25 |
| 5 | 888,4 | 205,85 |
| 6 | 859,4 | 205,44 |
| 7 | 879,1 | 209,75 |
| 8 | 873,1 | 203,51 |
| 9 | 897,7 | 202,95 |
| 10 | 874,5 | 182,27 |
| | m = 824,16 | m = 188,75 |
| | σ = 85,958 | σ = 21,619 |
| | CV = 10,43 % | CV = 11,45 % |

La répétabilité est mesurée par le coefficient de variation (CV) ; elle est d'autant meilleure que le coefficient de variation est faible.
2. Chromatogramme après révélation à la ninhydrine par le dispositif de révélation sous pression - lecture à 510 nm :

| DEPOT | AIRE | HAUTEUR |
|---|---|---|
| 1 | 2312,9 | 460,27 |
| 2 | 2136,7 | 428,67 |
| 3 | 2225,0 | 467,70 |
| 4 | 2268,3 | 482,02 |
| 5 | 2209,7 | 471,81 |
| 6 | 2122,8 | 460,02 |
| 7 | 2142,7 | 465,76 |
| 8 | 2174,3 | 452,84 |
| 9 | 2188,1 | 455,28 |
| 10 | 2207,4 | 422,76 |
| | m = 2198,8 | m = 456,71 |
| | σ = 59,835 | σ = 18,411 |
| | CV = 2,72 % | CV = 4,03 % |

Le dispositif de révélation conforme à l'invention permet, de manière inattendue, d'obtenir des résultats et une précision nettement améliorés par rapport à la technique de référence (U.V.).

### Exemple 2 :

Les résultats obtenus dans l'exemple 1 sont comparés à ceux obtenus lorsque, dans les mêmes conditions, la révélation est réalisée par pulvérisation.
1. Chromatogramme non révélé - lecture à 254 nm (U.V. direct) :

| DEPOT | AIRE | HAUTEUR |
|---|---|---|
| 1 | 922,1 | 181,59 |
| 2 | 918,1 | 179,51 |
| 3 | 869,5 | 175,36 |
| 4 | 871,4 | 170,30 |
| 5 | 842,5 | 167,04 |
| 6 | 833,9 | 164,93 |
| 7 | 835,3 | 166,51 |
| 8 | 864,8 | 171,63 |
| 9 | 829,6 | 170,97 |
| 10 | 870,8 | 174,08 |
| | m = 865,8 | m = 172,19 |
| | σ = 32,96 | σ = 5,502 |
| | CV = 3,81 % | CV = 3,19 % |

2. Chromatogramme après révélation à la ninhydrine par pulvérisation classique - lecture à 510 nm :

| DEPOT | AIRE | HAUTEUR |
|---|---|---|
| 1 | 1686,9 | 321,07 |
| 2 | 1639,0 | 312,03 |
| 3 | 1729,3 | 331,35 |
| 4 | 1743,1 | 332,25 |
| 5 | 1676,3 | 327,02 |
| 6 | 1614,7 | 313,29 |
| 7 | 1508,7 | 290,53 |
| 8 | 1455,4 | 283,81 |
| 9 | 1493,4 | 296,73 |
| 10 | 1482,8 | 290,04 |
| | m = 1602,96 | m = 309,812 |
| | σ = 108,81 | σ = 18,309 |
| | CV = 6,79 % | CV = 5,91 % |

Lorsque l'on utilise la technique de révélation classique, par pulvérisation, les résultats sont moins bons qu'en U.V. direct.

### Exemple 3 : Etude de la relation entre le signal détecté et la quantité déposée.

10 dépôts de 4 µl de solutions de tryptophane à : 0,1 mg/ml, 0,2 mg/ml, 0,5 mg/ml, 1 mg/ml et 2 mg/ml ont été déposés sur une plaque de chromatographie en couche mince en cellulose 20 x 20 (sans fluorescence), (MERCK DARMSTADT, R.F.A.).

Les lectures ont été effectuées avant révélation à 275 nm et après révélation par la ninhydrine à 288 nm. La révélation est faite d'une part, par spray et d'autre part à l'aide de la DSP (dérivation sous pression conforme à l'invention).

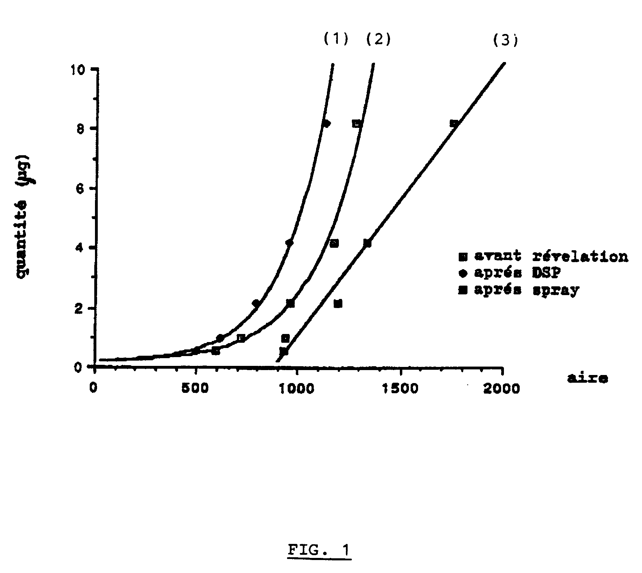

Comme le montre les courbes d'étalonnages (figure 1), il y a similitude entre la lecture en UV. direct (courbe 2) et la dérivation sous pression (courbe 1,) contrairement à la révélation par spray (courbe 3), qui devient linéaire.
Les équations desdites courbes sont les suivantes :
- UV direct à 275 nm (courbe 2): : Y = 0,041 x 10^{0,0118 X} r = 0,9958
- DSP à 288 nm (courbe 1): : Y = 0,047 x 10^{0,0021 X} r = 0,9972
- Spray à 288 nm (courbe 3): : Y = 0,0095 X -8,5226 r = 0,9946

### Exemple 4 : Détection et quantification de vitamines hydrosolubles.

Des solutions test contenant 9 vitamines hydrosolubles ont été préparées selon des concentrations croissantes.

Une première solution a été établie comme suit :

| | | | |
|---|---|---|---|
| Vitamine C : | 2,4 g | Vitamine B₁ : | 24,6 mg |
| Vitamine B₂ : | 32,6 mg | Vitamine B₆ : | 24,2 mg |
| Vitamine B₁₂ : | 0,4 mg | Biotine : | 2,42 mg |
| Acide folique : | 4,88 mg | Niacinamide : | 160,6 mg |
| Pantothénate de Ca : | 121,2 mg | Eau qsp : | 100 ml |

Les autres solutions correspondent à une dilution au demi et au quart de la solution ci-dessus.

10 dépôts de 10 µl de ces solutions ont été appliqués sur des plaques silice HPTLC - 60 F 254 - 20 x 20 (Merck Darmstadt - RFA) à 2 cm du bord de la plaque. La migration se fait par OPLC, selon les conditions suivantes :
Débit : 0,2 ml/min développement : 16 cm
Pression de la pompe à eau : 25 bars
Pression de la pompe à éluant : 4 bars
Pre-rum à l'hexane.

La plaque est séchée à l'air, la lecture est réalisée en UV direct à 254 nm pour les vitamines B₁, B₂, C, et la niacinamide, puis à 290 nm pour l'acide folique et la vitamine B₆.

La vitamine B₁₂ et la biotine sont enregistrées à 530 nm après DSP par une solution à 0,1 % (p/v) de 4-diméthyl amine-cinnamaldéhyde et 1 % (v/v) d'acide sulfurique dans l'éthanol.

Le pantothénate de calcium est lu à 375 nm après DSP, par la ninhydrine.

La quantification est réalisée par lecture densitométrique en réflexion, à l'aide des surfaces des pics obtenus, comme le montre le Tableau ci-après :

| | Vitamines | Ecart-type (%) n = 10 | Résultats (%) | Linéarité (r) |
|---|---|---|---|---|
| Détection UV direct 254 nm | B₁ | 1,40 | 97,6 | 0,9999567 |
| | B₂ | 6,61 | 99,9 | 0,9999607 |
| | Niacinamide | 2,23 | 98,8 | 0,99998054 |
| | C | 1,23 | 97,8 | 0,999976 |
| 290 nm | Acide folique | 11,35 | 95,6 | 0,99995382 |
| | B₆ | 7,56 | 100,0 | 0,9999805 |
| DSP à cinnamaldéhyde | B₁₂ | 4,82 | 100,8 | 0,99958 |
| | Biotine | 3,51 | 101,7 | 0,999256 |
| DSP à ninhydrine | Pantothénate de Calcium | 2,51 | 97,22 | 0,99915 |

### Exemple 5 : Etude de la pression à appliquer lors de la mise en oeuvre du procédé conforme à l'invention.

Les plaques de chromatographie en couche mince en cellulose 10 x 10 (sans fluorescence) (Merck-Darmstadt-RFA) ont été révélées par du dragendorff à l'aide de la dérivation sous pression, conforme à l'invention sur une surface de 5 x 10 cm. Le polymère de 4,5 mm d'épaisseur utilisé a été comprimé pendant 5 secondes à l'aide de poids de 500 g, 1 000 g, 2 000 g et 5 000 g ainsi qu'une révélation sans pression correspondant à une simple apposition du polymére sur la plaque.

Une lecture densitométrique du bruit de fond obtenu a été réalisée ; la longueur d'onde utilisée est de 350 nm, maximum d'absorption du dragendorff. Le zéro est obtenu sur la partie non révélée de la plaque.

| | | Absorbances lues : |
|---|---|---|
| Dépôt sans pression | 0 g/50 cm2 | 1810 ± 18,7 % |
| Dépôt avec pression | 500 g/50 cm2 | 2175 ± 3,4 % |
| | 1000 g/50 cm2 | 1625 ± 32,3 % |
| | 2000 g/50 cm2 | 1275 ± 21,5 % |
| | 5000 g/50 cm2 | 2075 ± 3,6 % |

A une pression appliquée sur le polymère correspond une aspiration du réactif lors du relâchement de cette pression. Celle-ci est très importante lors des applications des poids de 1 000 g et 2 000 g/50 cm2 et provoque un retour du révélateur au sein du polymère. Ce retour est négligeable pour 5 000 g/50 cm2 ou plus et inexistant pour une pression de 500 g/50 cm2.

L'absence de pression provoque une simple diffusion du réactif vers la plaque de façon très inhomogène.

La révélation optimum est obtenue à l'aide d'une pression de 5 000 g/50 cm2 soit 40 kg pour une plaque standard de 20 x 20 cm pour un polymère de 4,5 mm d'épaisseur.

Le procédé conforme à l'invention peut notamment être mise en oeuvre à l'aide de l'un des dispositifs décrits ci-après.

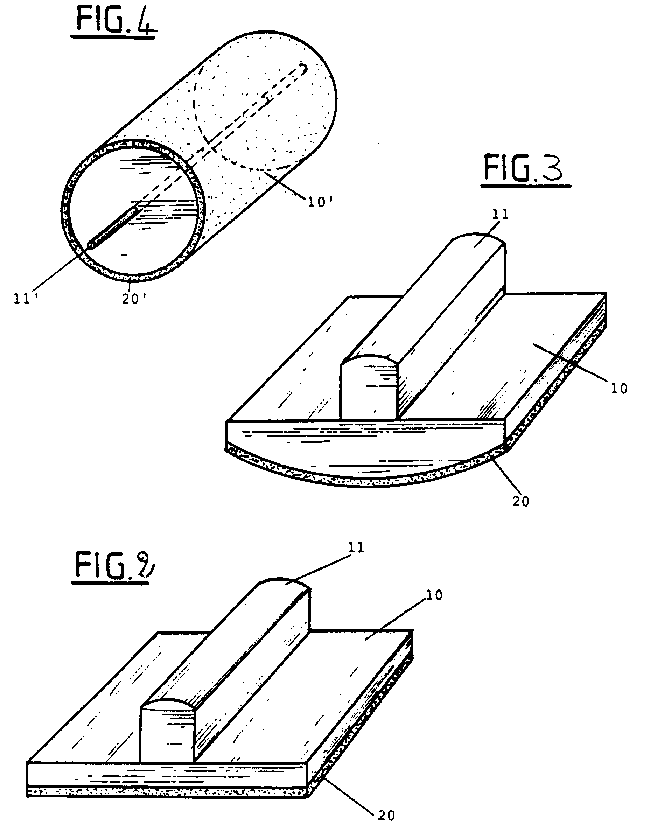

Le dispositif conforme à la présente invention, représenté à la figure 2 comprend un support rigide 10 muni d'un organe de manipulation (préhension) 11, sur lequel est montée une matière en polymère 20, imbibée de réactif de révélation. Dans cette réalisation, et ce, de manière non limitative, ledit dispositif est de forme carrée, de côté de 200 mm, c'est à dire de même dimension que les plaques de chromatographie ; la matière polymérique présente une épaisseur de 4,5 mm, alors que le support rigide à une épaisseur de 20 mm.

Ledit dispositif présente en coupe une forme en T inversé et est avantageusement utilisé pour appliquer le réactif de révélation sur une plaque de chromatographie, comme décrit dans l'exemple 1 ci-dessus.

Après utilisation, ledit dispositif est stocké dans des cuves hermétiques appropriées.

La figure 3 représente un autre mode de réalisation du dispositif conforme à l'invention dans lequel la partie du support rigide 10 en contact avec le support polymérique 20 imbibé de réactif est légèrement bombé.

Le dispositif conforme à la présente invention, représenté à la figure 4 comprend un support rigide 10' en forme de rouleau, muni d'un axe de manipulation 11' autour duquel est appliquée la matière poreuse polymérique 20', imbibée de réactif de révélation, comme décrit dans l'exemple 1 ci-dessus.

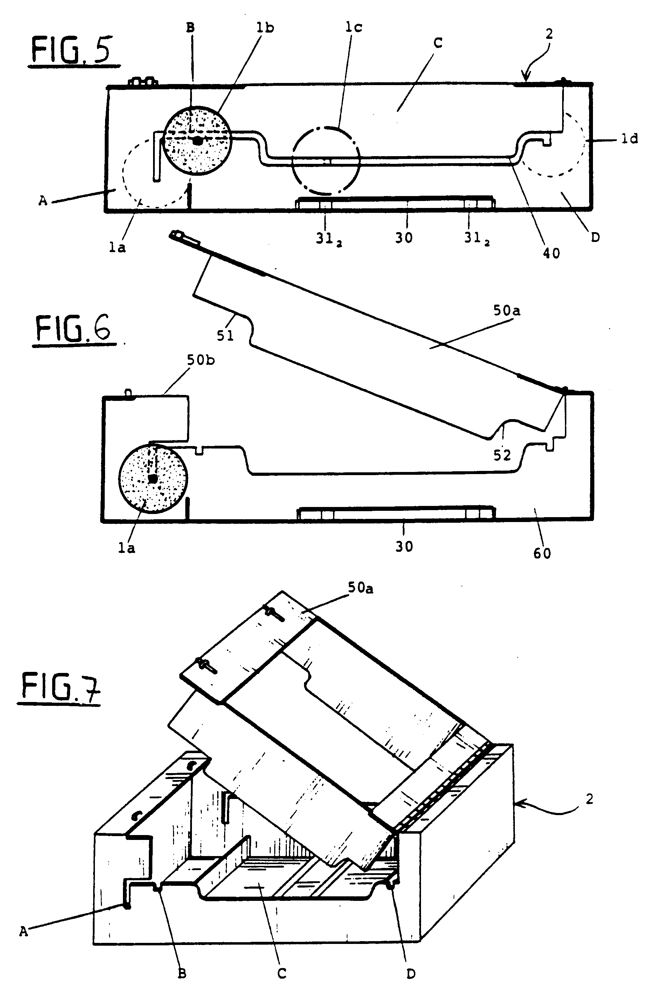

Ledit dispositif est notamment utilisé dans une installation conforme à l'invention, comme visible sur les figures 5, 6 et 7 pour appliquer le réactif de révélation par roulement sur une plaque de chromatographie 30.

La figure 5 représente un mode de réalisation d'une installation conforme à l'invention sous la forme d'une boîte 2, qui comprend :
- une zone d'imprégnation A du dispositif 1, représentée dans cette installation par un bac dans lequel se trouve un réactif de révélation, comme décrit dans l'exemple 1 ;
- une zone de révélation C, où se trouve la plaque de chromatographie 30 à révéler et qui comprend également les supports de plaque 31₁ et 31₂ ainsi que les butées 32₁ et 32₂, qui bloquent ladite plaque ;
- des moyens de guidage et de déplacement 40 du dispositif 1 entre une position la où il se trouve dans la zone d'imprégnation et une position 1d dite de repos (zone D) ; les extrémités de l'axe 11' dudit dispositif sont ainsi reçues dans les glissières 41 du moyen 40 s'étendant au dessus de la plaque de chromatographie 30 ;
- une zone d'égouttage B du dispositif 1 (position 1b dudit dispositif), située entre la zone d'imprégnation A et la zone de révélation C.

Une telle installation permet l'application d'une pression constante et uniforme sur ladite plaque 30 et permet de ce fait l'obtention d'une révélation nettement améliorée, comme montré aux exemples 1 et 2 ci-dessus.

Un dispositif conforme à l'invention 1 est tout d'abord placé dans la zone d'imprégnation A, en position 1a et est ainsi imprégné de réactif de révélation ; puis ledit dispositif est transféré en position 1b, dans la zone d'égouttage B, dans laquelle l'éventuel excédent de réactif est égoutté, avant le passage du dispositif 1 dans la zone de révélation C, dans laquelle ledit réactif est libéré du dispositif et imprègne uniformément la plaque à révéler.

La figure 6 représente ladite installation, avec la partie amovible 50a du couvercle 50 pivotant, qui permet l'accès aux zones d'imprégnation et de révélation, ouverte. Ledit couvercle présente deux rebords latéraux découpés en gradins, lesdits rebords du couvercle délimitant les glissière 41 du moyen 40 avec les parois 60 latérales de la boîte 2, découpées de façon à correspondre auxdits rebords.

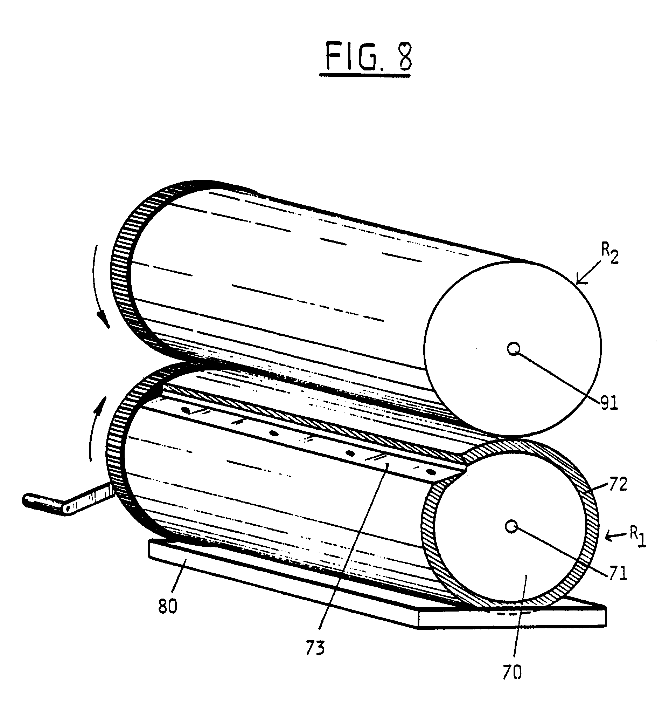

La figure 7 représente une vue en perspective de l'installation telle que décrite aux figures 5 et 6.

La partie de l'installation représentée à la figure 8 comprend :
. un dispositif de révélation formé d'un rouleau R₁ qui comprend un support rigide 70 de forme cylindrique tournant autour d'un axe de rotation fixe 71 et sur la surface duquel est appliquée une bande 72 de matière poreuse polymérique, imbibée de réactif de révélation, comme décrit dans l'exemple 1 ci-dessus. Le rouleau R₁ comporte un moyen de fixation de la matière poreuse polymérique 72, formé par exemple par une pince 73 placée le long d'une génératrice du rouleau, et encastrée dans celui-ci pour ne pas faire saillie au-dessus de la surface cylindrique du rouleau, cette pince permettant de fixer ladite matière poreuse 72 par une de ses extrémités, l'autre extrémité restant libre. Le rouleau R₁ tourne autour de l'axe fixe 71 dans le sens des aiguilles d'une montre en figure 1, en étant entraîné en rotation par tout moyen approprié, notamment un moyen mécanique tel qu'une manivelle ou bien un moteur ;
. un bac à réactif 80, éventuellement extractible, situé sous le rouleau R₁ ;
. un rouleau R₂ tournant autour d'un axe fixe 91, parallèle à celui du rouleau R₁ et verticalement écarté de celui-ci ; ce rouleau R₂ est entraîné à l'aide de moyens appropriés et notamment, de manière non limitative, à l'aide d'engrenages, lors de la rotation du cylindre R₁, dans le sens opposé à ce dernier et à une vitesse identique.
. la plaque de chromatographie à révéler P, comme visible sur les figures 2 et 3, qui est prise en sandwich entre les rouleaux R₁ et R₂. La plaque est entraînée par les deux rouleaux et déplacée en contact avec la matière poreuse, sous une pression déterminée en fonction de l'épaisseur de la plaque P, de l'épaisseur de la matière poreuse et de la distance entre les deux rouleaux.

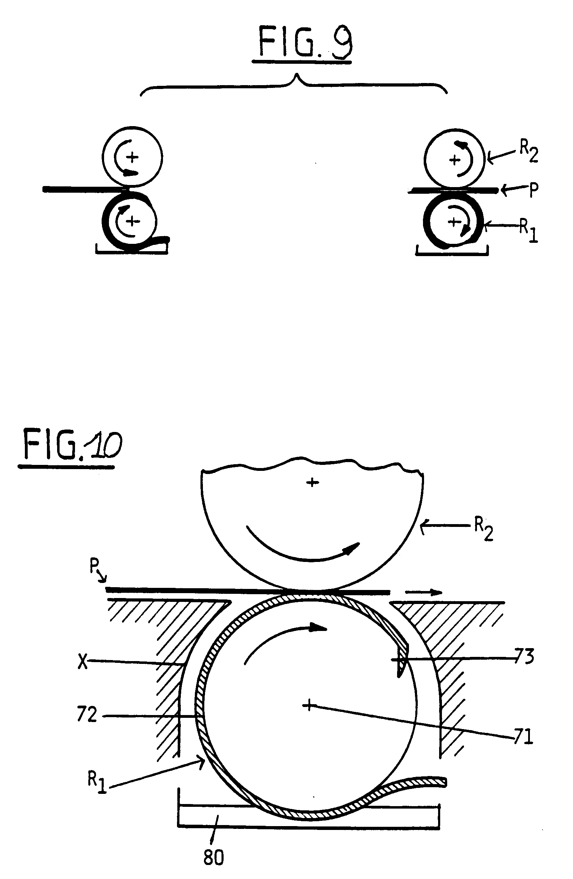

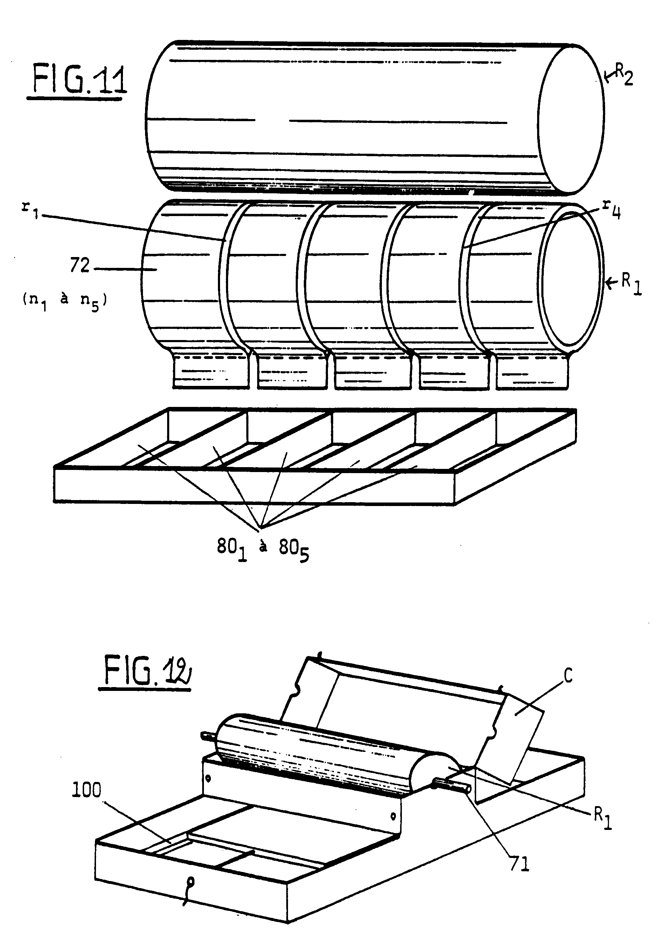

Les figures 9 et 10 montrent des vues en coupe de l'installation de la figure 8. Le bac à réactif 80, rempli de réactif approprié, est placé sous le rouleau R₁ ; la bande poreuse polymérique 72 est fixée dans la pince 12 du rouleau R₁. Lors de la première rotation du rouleau R₁, la matière poreuse 72 épouse la forme du rouleau. En arrivant dans le bac 80, elle est imprégnée de réactif de façon continue, lors de chaque tour. Une rotation peut être effectuée pour pré-imprégner la matière 72, afin de la saturer en réactif, avant le passage de la plaque P.

La plaque à révéler P est placée de manière à ce que sa phase stationnaire soit en contact avec ladite matière poreuse 72. La révélation se fait au fur et à mesure de la rotation et l'excès de réactif en amont de la zone de révélation est rejeté dans le bac 80. L'excès de réactif après révélation est, pour sa part, réabsorbé par la matière poreuse 72.

La figure 10 montre plus particulièrement l'extrémité libre de la bande de matière poreuse 72, et un boîtier X dans lequel est logé et protégé le rouleau R₁.

La figure 11 représente un rouleau R₁ comprenant, dans l'exemple représenté, 5 bandes (n₁ à n₅) de matière poreuse 72, séparées entre elles par des rainures r₁ à r₄, lesquelles bandes sont respectivement imprégnées dans des compartiments 80₁ à 80₅ du bac à réactif 80 compartimenté. Cette installation permet ainsi de révéler sur une même plaque chromatographique, différents chromatogrammes à l'aide, dans la réalisation représentée, de cinq révélateurs différents.

La figure 12 montre un mode de réalisation de l'installation dans lequel la plaque P, placée sur un support guidé sur des rails ou glissières 100, passe sous le rouleau R₁, tournant autour de l'axe fixe 71. L'écartement entre la matière poreuse 72 recouvrant ledit rouleau et la plaque P est déterminé pour provoquer une pression suffisante à la réalisation de la révélation. Le déplacement du support mobile portant la plaque P se fait par poussée ou traction. On peut pour cela utiliser tout moyen approprié de déplacement du support, ou utiliser un convoyeur à bande formant ce support. Le contact de la plaque P sur le rouleau R₁ permet la rotation de celui-ci, et la compression de la matière poreuse 72, le rouleau R₁ restant bien en place lors du passage de la plaque P grâce à la fermeture du capot C.

Ainsi que cela ressort de ce qui précède, l'invention ne se limite nullement à ceux de ses modes de mise en oeuvre, de réalisation et d'application qui viennent d'être décrits de façon plus explicite ; elle en embrasse au contraire toutes les variantes qui peuvent venir à l'esprit du technicien en la matière, sans s'écarter du cadre, ni de la portée, de la présente invention.

## Revendications

1. Procédé de révélation en chromatographie en couche mince, comprenant une mise en contact d'une plaque de chromatographie (P) à révéler avec un matériau imprégné d'un réactif de révélation, caractérisé en ce que ladite mise en contact est réalisée en pressant, de manière sensiblement uniforme, un polymère poreux (20, 20', 72) contenant ledit réactif de révélation contre ladite plaque de CCM à révéler, lequel polymère poreux possède (i) un pouvoir absorbant suffisant pour imprégner complètement ladite plaque de chromatographie, sans l'immerger lors de la mise en contact sous pression, et (ii) une capacité de réabsorption de l'excès de réactif, au moment du retrait dudit polymère poreux de ladite plaque.

2. Dispositif de révélation pour chromatographie en couche mince, caractérisé en ce qu'il comprend :
- un polymère poreux (20, 20' ; 72), résistant aux réactifs de révélation usuels de la chromatographie et présentant un pouvoir absorbant suffisant pour imprégner complètement une plaque de chromatographie (P) sans l'immerger au moment de la mise en contact sous pression et pour réabsorber l'excès de réactif lors du retrait de ladite matière poreuse de la plaque de chromatographie, et
- un support de manipulation (10, 11 ; 10', 11' ; 70) inerte par rapport aux réactifs de révélation, de rigidité suffisante pour permettre l'application d'une pression appropriée sur la plaque de chromatographie (P) en couche mince et sur lequel est montée ou fixée ladite matière poreuse.

3. Dispositif selon la revendication 2, caractérisé en ce que ledit polymère est une mousse de polyuréthane à alvéoles ouvertes.

4. Dispositif selon la revendication 2 ou la revendication 3, caractérisé en ce qu'il est de forme cylindrique, par exemple un rouleau ou présente une surface semi-cylindrique convexe.

5. Dispositif selon l'une quelconque des revendications 2 à 4, caractérisé en ce qu'il est de forme rectangulaire.

6. Installation appropriée à l'étape de révélation de la chromatographie en couche mince, caractérisée en ce qu'elle comprend, outre un dispositif selon l'une quelconque des revendications 2 à 5, des moyens de guidage et de déplacement dudit dispositif (40) et/ou de la plaque de chromatographie à révéler (R₂, 100).

7. Installation selon la revendication 6, caractérisée en ce que, lorsqu'elle comprend des moyens de guidage et de déplacement du dispositif, elle comprend en outre :
- une zone d'imprégnation (A) du dispositif (1) de révélation selon l'une quelconque des revendications 2 à 5 ;
- une zone de révélation (C) où se trouve la plaque de chromatographie en couche mince (30) à révéler ; et
lesdits moyens de guidage (40) déplacent ledit dispositif entre une position où il se trouve dans la zone d'imprégnation et une position de repos (1b), lequel déplacement provoque la mise sous pression du dispositif selon l'une quelconque des revendications 2 à 5 avec la plaque de chromatographie en couche mince et l'imprégnation de ladite plaque par le réactif de révélation.

8. Installation selon la revendication 6 ou la revendication 7, caractérisée en ce qu'elle comprend en outre une zone d'égouttage (B) du dispositif, entre la zone d'imprégnation et la zone de révélation.

9. Installation selon la revendication 7 ou la revendication 8, caractérisée en ce que ledit dispositif est avantageusement un rouleau de forme cylindrique, comprenant un arbre axial dont les extrémités sont reçues dans des glissières de guidage (41) s'étendant latéralement de part et d'autre des zones précitées d'imprégnation, de révélation et de repos.

10. Installation selon l'une quelconque des revendications 6 à 9, caractérisée en ce qu'elle se présente sous la forme d'une boîte (2) à couvercle (50) dont la partie pivotante (50a) permet l'accès aux zones précitées d'imprégnation, de révélation et de repos et délimitant les glissières précitées avec les parois latérales fixes (60) de ladite boîte (2).

11. Installation selon la revendication 6, caractérisée en ce que, lorsqu'elle comprend des moyens de guidage et de déplacement (R₂, 100) de la plaque de chromatographie à révéler, ledit dispositif comprend un rouleau cylindrique (R₁) monté en rotation autour d'un axe fixe (71) et sur la surface cylindrique duquel est enroulée ladite matière poreuse (72) imprégnée desdits réactifs et lesdits moyens de guidage déplacent ladite plaque de chromatographie (P) -située à une distance dudit rouleau cylindrique choisie pour assurer une pression de contact déterminée de la matière poreuse sur la plaque et pour réaliser l'imprégnation de ladite plaque par le réactif de révélation-, dans un plan tangentiel audit rouleau.

12. Installation selon la revendication 11, caractérisée en ce que les moyens de guidage (R₂, 100) de la plaque de chromatographie à révéler sont constitués par un deuxième rouleau (R₂) tournant autour d'un axe fixe (91), parallèle à celui du premier rouleau et verticalement écarté de celui-ci.

13. Installation selon la revendication 12, caractérisée en ce qu'au moins l'un des deux rouleaux est entraîné en rotation autour de son axe.

14. Installation selon la revendication 12 ou la revendication 13, caractérisée en ce qu'elle comprend une zone d'imprégnation (80) en réactif, située sous le premier rouleau.

15. Installation selon l'une quelconque des revendications 12 à 14, caractérisée en ce que la surface cylindrique du premier rouleau est partagée en plusieurs compartiments ou secteurs, juxtaposés le long de l'axe du rouleau.

16. Installation selon l'une quelconque des revendications 12 à 15, caractérisée en ce que les moyens de guidage de la plaque de chromatographie sont constitués par des glissières (100) orientées dans le plan précité perpendiculairement à l'axe du dispositif, recevant les bords de ladite plaque de révélation ou de son support, et des moyens de traction ou de poussée sont prévus pour déplacer ladite plaque le long des glissières.

17. Installation selon la revendication 16, caractérisée en ce que lesdites glissières sont des rainures ou des rails montés sur un boîtier de support dudit premier rouleau cité.

## Claims

1. Developing process using thin-layer chromatography, comprising bringing a chromatographic plate (P) to be developed into contact with a material impregnated with a developing reagent, characterized in that the said contact is brought about by pressing, in substantially uniform manner, a porous polymer (20, 20', 72) containing said developing reagent, against the said TLC plate to be developed, this porous polymer possessing (i) sufficient absorbing power to completely impregnate the said chromatographic plate without immersing it during the contact under pressure, and (ii) a capacity for reabsorbing the excess reagent when the said porous polymer is withdrawn from the said plate.

2. Developing device for thin-layer chromatography, characterized in that it comprises:
- a porous polymer (20, 20'; 72) which is resistant to conventional developing reagents of chromatography and which has sufficient absorbing power to completely impregnate a chromatographic plate (P) without immersing it at the time of contact under pressure and to reabsorb the excess reagent when the said porous material is withdrawn from the chromatographic plate, and
- a manipulation support (10, 11; 10', 11'; 70) which is inert with respect to the developing reagents, has sufficient rigidity to allow an appropriate pressure to be applied to the thin-layer chromatographic plate (P) and on which the said porous material is mounted or fixed.

3. Device according to Claim 2, characterized in that the said polymer is an open-cell polyurethane foam.

4. Device according to Claim 2 or Claim 3, characterized in that it is cylindrical in shape, for example a roll, or has a semi-cylindrical convex surface.

5. Device according to any one of Claims 2 to 4, characterized in that it is rectangular in shape.

6. Arrangement suitable for the step of developing in thin-layer chromatography, characterized in that it comprises, in addition to a device according to any one of Claims 2 to 5, means for guiding and displacing the said device (40) and/or the chromatographic plate to be developed (R₂, 100).

7. Arrangement according to Claim 6, characterized in that if it comprises means for guiding and displacing the device, it furthermore comprises:
- a zone (A) for impregnating the developing device (1) according to any one of Claims 2 to 5;
- a developing zone (C) in which the thin-layer chromatographic plate (30) to be developed is located; and
the said guiding means (40) displace the said device between a position in which it is located in the impregnation zone and a rest position (1b), this displacement causing the pressurization of the device according to any one of Claims 2 to 5 with the thin-layer chromatographic plate and the impregnation of the said plate by the developing reagent.

8. Arrangement according to Claim 6 or Claim 7, characterized in that it further comprises a zone (B) for dewatering the device, between the impregnation zone and the developing zone.

9. Arrangement according to Claim 7 or Claim 8, characterized in that the said device is advantageously a roll which is cylindrical in shape, comprising an axial shaft whereof the ends are received in guiding slides (41) which extend laterally on either side of the above-mentioned impregnation, developing and rest zones.

10. Arrangement according to any one of Claims 6 to 9, characterized in that it is in the form of a box (2) having a lid (50) whereof the pivoting part (50a) allows access to the above-mentioned impregnation, developing and rest zones, delimiting the above-mentioned slides with the fixed lateral walls (60) of the said box (2).

11. Arrangement according to Claim 6, characterized in that, if it comprises means (R₂, 100) for guiding and displacing the chromatographic plate to be developed, the said device comprises a cylindrical roll (R₁) mounted rotatably about a fixed axis (71) and on the cylindrical surface of which there is rolled the said porous material (72) impregnated with the said reagents and the said guiding means displace the said chromatographic plate (P) - located at a spacing from the said cylindrical roll which is selected to ensure a predetermined contact pressure of the porous material against the plate and to bring about impregnation of the said plate by the developing reagent - in a plane tangential to the said roll.

12. Arrangement according to Claim 11, characterized in that the means (R₂, 100) for guiding the said chromatographic plate to be developed are formed by a second roll (R₂) rotating about a fixed axis (91) parallel to that of the first roll and vertically spaced therefrom.

13. Arrangement according to Claim 12, characterized in that at least one of the two rolls is driven in rotation about its axis.

14. Arrangement according to Claim 12 or Claim 13, characterized in that it comprises a zone (80) for impregnation with reagent, located below the first roll.

15. Arrangement according to any one of Claims 12 to 14, characterized in that the cylindrical surface of the first roll is divided into a plurality of compartments or sectors which are placed side by side along the axis of the roll.

16. Arrangement according to any one of Claims 12 to 15, characterized in that the means for guiding the chromatographic plate are formed by slides (100) which are oriented in the above-mentioned plane perpendicularly to the axis of the device, receiving the edges of the said developing plate or of its support, and pulling or pushing means are provided to displace the said plate along the slides.

17. Arrangement according to Claim 16, characterized in that the said slides are grooves or rails mounted on a support casing of the said first roll mentioned.

## Patentansprüche

1. Detektionsverfahren für die Dünnschicht-Chromatographie, wobei man eine Chromatographieplatte (P) zur Detektion mit einem Material, das mit einem Detektionsreagens imprägniert ist, in Kontakt bringt, dadurch **gekennzeichnet,** daß das Inkontaktbringen dadurch durchgeführt wird, daß man auf deutlich gleichförmige Weise ein poröses Polymeres (20, 20'; 72), das das Detektionsreagens enthält, gegen die zu detektierende DC-Platte preßt, wobei das poröse Polymere (i) eine ausreichende Absorptionskraft, um vollständig die Chromatographieplatte zu imprägnieren, ohne sie während des Inkontaktbringens unter Druck einzutauchen, und (ii) eine Kapazität zur Reabsorption von überschüssigem Reagens zum Zeitpunkt des Abziehens des porösen Polymeren von der Platte besitzt.

2. Vorrichtung für die Detektion in der Dünnschicht-Chromatographie, dadurch **gekennzeichnet,** daß sie umfaßt:
- ein poröses Polymeres (20, 20'; 72), das gegenüber den üblichen Detektionsreagentien der Chromatographie resistent ist und eine ausreichende Absorptionskraft besitzt, um vollständig eine Chromatographieplatte (P) zu imprägnieren, ohne sie zum Zeitpunkt des Inkontaktbringens unter Druck einzutauchen, und um überschüssiges Reagens während des Abziehens des porösen Materials von der Chromatographieplatte zu reabsorbieren, und
- einen bezogen auf die Detektionsreagentien inerten Handhabungsträger (10, 11; 10', 11'; 70) mit einer ausreichenden Festigkeit, um die Anlegung eines geeigneten Drucks auf die Dünnschicht-Chromatographieplatte (P) zu erlauben, und auf den das poröse Material aufgebracht oder fixiert ist.

3. Vorrichtung nach Anspruch 2, dadurch **gekennzeichnet,** daß das Polymere ein offenzelliger Polyurethanschaumstoff ist.

4. Vorrichtung nach Anspruch 2 oder 3, dadurch **gekennzeichnet,** daß sie in zylindrischer Form, beispielsweise in Form einer Walze, vorliegt oder eine konvexe halbzylindrische Oberfläche besitzt.

5. Vorrichtung nach einem der Ansprüche 2 bis 4, dadurch **gekennzeichnet,** daß sie rechteckige Form besitzt.

6. Für die Stufe der dünnschicht-chromatographischen Detektion geeignete Einrichtung, dadurch **gekennzeichnet,** daß sie außer einer Vorrichtung nach einem der Ansprüche 2 bis 5 Führungselemente und Verschiebungselemente der Vorrichtung (40) und/oder der Chromatographieplatte zur Detektion (R₂, 100) umfaßt.

7. Einrichtung nach Anspruch 6, dadurch **gekennzeichnet,** daß sie, wenn sie Elemente zur Führung und Verschiebung der Vorrichtung umfaßt, weiterhin umfaßt:
- eine Imprägnierungszone (A) der Detektionsvorrichtung (1) nach einem der Ansprüche 2 bis 5;
- eine Detektionszone (C), in der sich die dünnschicht-chromatographische Platte (30) zur Detektion befindet, und wobei
die Führungselemente (40) die Vorrichtung zwischen einer Position, in der sie sich in der Imprägnierungszone befindet, und einer Ruheposition (1b) verschieben, wobei die Verschiebung bewirkt, daß die Vorrichtung nach einem der Ansprüche 2 bis 5 mit der dünnschicht-chromatographischen Platte unter Druck gesetzt wird, und die Platte mit dem Detektionsreagens imprägniert wird.

8. Einrichtung nach Anspruch 6 oder 7, dadurch **gekennzeichnet,** daß sie weiterhin eine Entwässerungszone (B) der Vorrichtung zwischen der Imprägnierungszone und der Detektionszone umfaßt.

9. Einrichtung nach Anspruch 7 oder 8, dadurch **gekennzeichnet,** daß die Vorrichtung vorteilhafterweise eine zylinderförmige Walze ist, welche eine äquatoriale Achse umfaßt, deren Enden in Führungsgleitschienen (41) münden, die sich lateral von einer Seite zur anderen der vorstehenden Imprägnierungs-, Detektions- und Ruhezonen erstrecken.

10. Einrichtung nach einem der Ansprüche 6 bis 9, dadurch **gekennzeichnet,** daß sie in Form eines Kastens (2) mit Deckel (50) vorliegt, dessen drehbarer Teil (50a) Zutritt zu den vorstehenden Imprägnierungs-, Detektions- und Ruhezonen gewährt und die genannten Gleitelemente mit lateralen fixierten Wänden (60) des Kastens (2) begrenzt.

11. Einrichtung nach Anspruch 6, dadurch **gekennzeichnet,** daß, wenn sie Elemente zur Führung und Verschiebung (R₂, 100) der Chromatographieplatte zur Detektion umfaßt, die Vorrichtung eine Zylinderwalze (R₁) umfaßt, die rotierend um eine feste Achse (71) angebracht ist, und auf deren zylindrischer Oberfläche das poröse Material (72), das mit den Reagentien imprägniert ist, aufgebracht ist, und die Führungselemente die Chromatographieplatte (P) - die in einer Entfernung der Zylinderwalze angebracht ist, die so gewählt ist, daß sie einen bestimmten Kontaktdruck des porösen Materials auf der Platte gewährleistet und die Imprägnierung der Platte durch das Detektionsreagens gewährleistet - in tangentialer Richtung der Walze verschieben.

12. Einrichtung nach Anspruch 11, dadurch **gekennzeichnet,** daß die Führungselemente (R₂, 100) der Chromatographieplatte zur Detektion aus einer zweiten Walze (R₂), die um eine feste Achse (91), die parallel der der ersten Walze ist und vertikal davon abgespreizt ist, bestehen.

13. Einrichtung nach Anspruch 12, dadurch **gekennzeichnet,** daß mindestens eine der zwei Walzen rotierend um ihre Achse angebracht ist.

14. Einrichtung nach Anspruch 12 oder 13, dadurch **gekennzeichnet,** daß sie eine Zone zur Imprägnierung (80) mit dem Reagens, die unter der ersten Walze angebracht ist, umfaßt.

15. Einrichtung nach einem der Ansprüche 12 bis 14, dadurch **gekennzeichnet,** daß die zylindrische Oberfläche der ersten Walze in mehrere Kompartimente oder Sektoren, die entlang der Achse der Walze angebracht sind, aufgeteilt ist.

16. Einrichtung nach einem der Ansprüche 12 bis 15, dadurch **gekennzeichnet,** daß die Führungselemente der Chromatographieplatte aus Gleitelementen (100) bestehen, die in der vorstehenden senkrechten Richtung zur Achse der Vorrichtung angeordnet sind, die die Ränder der Detektionsplatte oder des Trägers einnehmen, und Mittel zum Ziehen oder Drücken vorgesehen sind, um die Platte entlang der Führungselemente zu verschieben.

17. Einrichtung nach Anspruch 16, dadurch **gekennzeichnet,** daß die Führungsschienen Rillen oder Schienen, die auf ein Gehäuse des Trägers der ersten Walze montiert sind, sind.
